# EUROPÄISCHE PATENTSCHRIFT

(11) **EP 0 589 169 B1**
(45) Veröffentlichungstag und Bekanntmachung des Hinweises auf die Patenterteilung: **21.02.1996**
(21) Anmeldenummer: 93111688.3
(22) Anmeldetag: 21.07.1993
(51) Int. Cl.: F01N 7/00, F01N 3/20

(54) **Vorrichtung zur Überwachung der Funktionsfähigkeit von Katalysatoren in Abgasanlagen**
Device to monitor the operation of exhaust gas catalytic converters
Dispositif par surveiller de fonctionnement des catalyseurs de gaz d'échappement

(30) Priorität: 27.08.1992 DE 4228536
(43) Veröffentlichungstag der Anmeldung: 30.03.1994
(73) Patentinhaber: ROTH-Technik GmbH & Co. Forschung für Automobil- und Umwelttechnik, D-76571 Gaggenau (DE)
(72) Erfinder: Häfele, Edelbert, Dr., D-7500 Karlsruhe (DE)
(74) Vertreter: Säger, Manfred, Dipl.-Ing.

(56) Entgegenhaltungen:
- WO-A-91/14855
- DE-A- 3 924 518

## Beschreibung

Die vorliegende Erfindung betrifft eine Vorrichtung zur Überwachung der Funktionsfähigkeit von Katalysatoren in Abgasanlagen gemäß dem Oberbegriff desHauptanspruches.

Es ist bereits versucht worden, die Funktionsfähigkeit von Katalysatoren dadurch zu überwachen, daß die Sauerstoffkonzentration der Abgase vor und nach dem Katalysator gemessen wird. Ein solches Verfahren ist bekannt (EP-A-0 475 177). Es handelt sich dabei um ein indirektes Verfahren, da über die Reduzierung des Sauerstoffgehaltes auf die Anwesenheit der relevanten Komponenten CO, HC und NO_{X} geschlossen wird. Eine Temperaturerhöhung bei der katalytischen Reaktion tritt jedoch nur dann auf, wenn tatsächlich Kohlenwasserstoffe verbrannt werden. Durch die hohe Strömungsgeschwindigkeit sind solche Messungen schwierig, außerdem sind Sauerstoffsensoren relativ kompliziert, die Messungen sind insbesondere im Fahrbetrieb und bei hohen Lastwechseln ungenau.

Ferner ist eine gattungsgemäße Vorrichtung gemäß dem Oberbegriff des Hauptanspruches bekannt (WO91/14855 und WO91/14856). Hierbei werden elektrische Signale von im Wärmekontakt mit dem Katalysator stehendenTemperatursensoren durch eine Auswerteeinrichtung ausgewertet.

In Abhängigkeit von dem Ergebnis der Auswertung kann festgestellt werden, ob der Katalysator defekt oder in Ordnung ist.

Hierbei werden aber diskrete Temperatursensoren in den Katalysator eingesetzt. Dies ist insoweit von Nachteil, als der Temperatursensor dabei selbst vom Abgas umströmt wird und nicht nur die Temperatur an der Oberfläche des Katalysators selbst mißt, sondern einen Mittelwert zwischen der Temperatur, welche er in dem strömenden Abgas, welchem er ausgesetzt ist, annimmt. Insbesondere bei Messungen während des Lastwechsels können beträchtliche Abweichungen und daher Fehler entstehen, ganz abgesehen davon, daß das Integrieren des bzw. der Temperaturfühler in den Katalysator aufwendig ist.

Der Erfindung liegt die Aufgabe zugrunde, eine gattungsgemäße Vorrichtung gemäß dem Oberbegriff des Hauptanspruchs bereitzustellen, mit der die Temperatursensoren selbst einfacher ausgebildet, weniger aufwendig in den Katalysator eingesetzt werden können, wobei zugleich eine exakte Temperatur an der Oberfläche des Katalysators selbst meßbar ist.

Diese Aufgabe wird bei einer gattungsgemäßen Vorrichtung gemäß dem Oberbegriff des Hauptanspruchs erfindungsgemäß durch dessen kennzeichnende Merkale gelöst.

Erfindungsgemäß ist eine einfache Überwachung des Funktionszustandes von Katalysatoren in Abgasanlagen, beispielsweise von Kraftfahrzeugen, während des Fahrbetriebes möglich. Dabei wird die Oberflächentemperatur des Katalysators selbst, d.h. die Temperatur auf dem katalytisch wirksamen Material bestimmt. Für die Überwachung der Funktionsfähigkeit des Katalysators wird damit die reaktionstechnische Umsetzung der Schadstoffe und damit die dabei entstehende Wärmetönung ausgenutzt. Die dabei verwendeten Temperatursensoren sind befähigt, auch in Temperaturbereichen von wesentlich oberhalb von 600°C noch wirksam zu sein. Die Temperatursensoren werden direkt auf den katalysatorhaltigen keramischen Überzug (Washcoat) aufgebracht, der sich auf einem Träger, z.B. aus Metall oder Keramik, befindet. Der katalysatorhaltige Überzug wird beispielsweise durch Tauchen oder Sprühen auf den Träger aufgebracht. Das Aufbringen von Temperatursensoren direkt auf die katalytisch wirksame Schicht hat den Vorteil, daß die Temperatur direkt auf dem Katalysator gemessen wird, wo die Temperaturerhöhung bei der katalytischen Umsetzung wesentlich größer ist als im Gasraum. Die direkte Bestimmung der Temperatur des funktionellen Bauteils Katalysator hat Vorteile gegenüber indirekten Meßmethoden der Temperaturmessung in den Abgasen, da die Zeitkonstante der Messung wesentlich kleiner ist. Dadurch können Sekundärmaßnahmen, etwa zum Schutz des Katalysators, früher eingeleitet werden.

Durch Einsatz der Dickschichttechnik wird jeder Temperatursensor ohne Aufwand hergestellt und kann in einfachster Weise auf der Oberfläche des Katalysators angebracht werden. Infolge der kleinflächigen und ohne großes Eigenvolumen ausgebildeten Temperatursensoren folgen diese schnell den Temperaturschwankungen. Aufgrund der Anbringung direkt auf der Oberfläche des Katalysators wird auch genau die zu Messen beabsichtigte Temperatur erfaßt, bei der die Katalysatorwirkung eintritt. Schließlich wird infolge der Anordnung in Form einer Schicht im Gegensatz zu den diskreten Temperaturfühlern nach dem Stande der Technik auch keine Verfälschung des Meßergebnisses dadurch erzielt, daß keine dem Abgas außerhalb der Oberfläche des Katalysators ausgesetzten Bereiche des Temperaturfühlers (im Gegensatz zum Stand der Technik) vorhanden sind.

In bevorzugter Ausgestaltung der Erfindung werden zusätzlich zu den Temperatursensoren davon beabstandet angeordnete und elektrisch mit ihnen verbundene Anschlußkontakte ebenfalls in Dickschichttechnik aufgebracht, vorzugsweise aufgedruckt. Dies hat den Vorteil, daß der elektrische Anschluß mittels elektrischer Anschlußdrähte an den Anschlußkontakten örtlich beabstandet von dem eigentlichen Temperatursensor durchgeführt werden können. Diese dann der Temperatur des Abgases ausgesetzten elektrischen Anschlußdrähte können dann aufgrund der Wärmeleitung infolge der erfindungsgemäß örtlich versetzt angebrachten Anordnung das Meßergebnis nicht beeinflussen, wodurch zusätzlich eine äußerst genaue Temperaturmessung erfolgen kann.

Als Temperatursensoren werden bevorzugt Platin-Meßelemente eingesetzt. Sie können zusätzlich über eine separate Deckschicht als Wärmetönungssensoren mit hoher Betriebstemperatur ausgebildet werden. Diese Temperatursensoren sind an sich bekannt (DE-39 24 518 A1). Als Deckschichten werden bevorzugt Substanzen mit einer hohen katalytischen Aktivität für brennbare Komponenten (CO und HC) eingesetzt.

Erfindungsgemäß lassen sich beispielsweise in Strömungsrichtung der Abgase jeweils am Eingang und am Ausgang des Katalysators ein Temperatursensor anbringen. Durch die katalytische Umsetzung am Katalysator können Temperaturgradienten im Bereich von etwa 10 bis 100°C registriert werden, welche meßtechnisch mit Hilfe der auf der Katalysatoroberfläche befindlichen Temperatursensoren sehr gut nachgewiesen werden können. Wegen der hohen Strömuhgsgeschwindigkeit der Abgase sind die Temperaturgradienten in der Gasphase deutlich kleiner als auf dem Festkörper des Katalysators, so daß die erfindungsgemäße Funktionsüberwachung wesentlich schneller und genauer ist als eine Messung in der Gasphase. Eine weitere Möglichkeit besteht darin, daß bezüglich der Strömungsrichtung am Ausgang des Katalysators zwei nahe beieinander angeordnete Temperatursensoren vorgesehen werden, die als Wärmetönungssensoren ausgebildet sind. Dabei wird einer der beiden Sensoren mit einer gasdurchlässigen porösen Schutzschicht versehen, die einen Durchtritt der die Funktionsfähigkeit des Katalysators bestimmenden Gase, also beispielsweise Kohlenwasserstoffe, gestattet. An diesem Sensor tritt bei Vorhandensein von HC ein zusätzliche Wärmetönungseffekt auf. Der zweite Temperatursensor wird mit einer für die entsprechenden Gase undurchlässigen Schicht überzogen, also beispielsweise mit einer dichten Glasschicht. An diesem Sensor wird kein zusätzlicher Wärmetönungseffekt gemessen. Werden die beiden Sensoren am Ausgang des Katalysators plaziert, so sind bei Funktionsfähigkeit des Katalysators keine Temperaturgradienten meßbar.

Bei dieser Anordnung besteht der Sensor selbst aus einem katalytisch wirksamen Material, während das Referenzelement mit einer undurchlässigen Schicht abgedeckt wird oder auf andere Weise passiviert wird, um die Reaktion unverbrannter Kohlenwasserstoffe nicht zu katalysieren. Das Referenzelement ist also passiviert, während das Meßelement katalytisch aktiv ist. Die Erfindung wird nachfolgend unter Bezugnahme auf die Zeichnung näher erläutert. Hierin zeigt:
- Figur 1: die Anordnung für eine Funktionsüberwachung mit zwei Temperatursensoren am Eingang und Ausgang des Katalysators; und
- Figur 2: eine Anordnung mit zwei Sensoren am Ausgang des Katalysators.

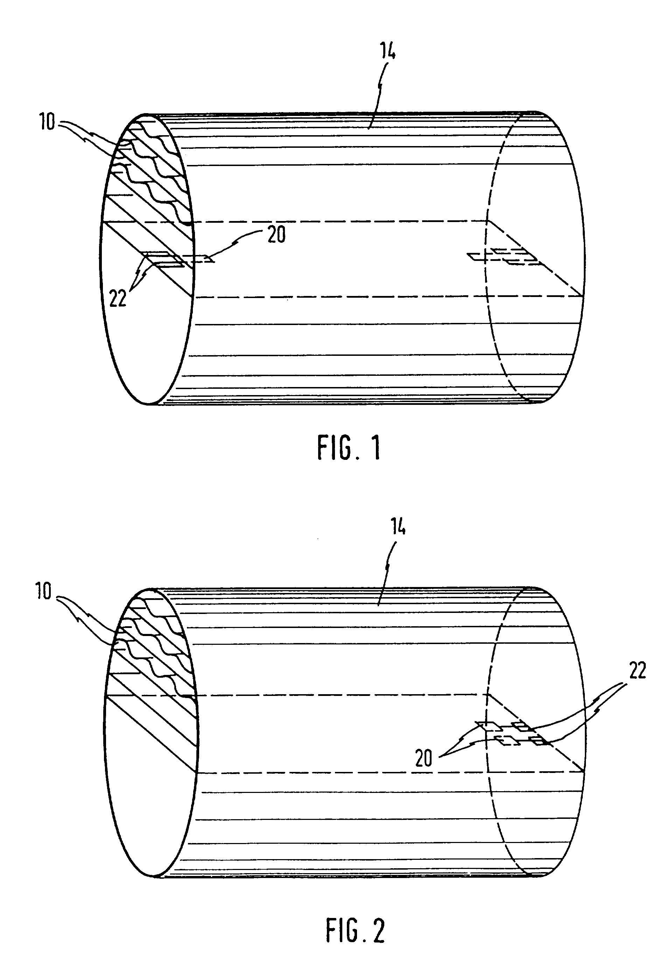

In Fig. 1 ist ein Katalysator 10 dargestellt, der aus sich abwechselnden Lagen von glatten und gewellten Katalysatorschichten besteht. Auf eine der Katalysatorschichten sind an den beiden Enden des Katalysators 10 Temperatursensoren 20 und damit elektrisch verbundene Anschlußkontakte 22 aufgedruckt, die mit einer Auswerteeinrichtung verbunden werden können.

Fig. 2 zeigt eine zweite Möglichkeit der Anordnung der Temperatursensoren. Hier sind am Ausgang 14 des Katalysators zwei Temperatursensoren vorgesehen, die als Wärmetönungssensoren ausgebildet sind. Die Sensoren 20 sind ebenso wie die Anschlußkontakte 22 auf eine Oberflächenschicht des Katalysators aufgedruckt.

## Patentansprüche

1. Vorrichtung zur Überwachung der Funktionsfähigkeit von im strömenden Abgas angeordneten, gegebenenfalls beheizbaren Katalysatoren in Abgasanlagen, vorzugsweise von Verbrennungsmotoren mit einem mit katalysatorhaltigem keramischem Überzug versehenen Trägermaterial, wobei elektrische Signale von im Wärmekontakt mit dem Katalysator stehenden Temperatursensoren (20), die die zur Temperatur proportionalen elektrischen Signale aufweisen, durch eine Auswerteeinrichtung ausgewertet werden,
**dadurch gekennzeichnet**,
daß die Temperatursensoren (20) mittels Dickschichttechnik direkt auf die katalytisch wirksame Oberfläche des Katalysators (10) aufgebracht sind.

2. Vorrichtung nach Anspruch 1, dadurch gekennzeichnet, daß zusätzlich zu den Temperatursensoren (20) davon beabstandet angeordnete und elektrisch mit ihnen verbundene Anschlußkontakte (22) in Dickschichttechnik aufgedruckt sind.

3. Vorrichtung nach Anspruch 1 oder 2, dadurch gekennzeichnet, daß die Temperatursensoren als Wärmetönungssensoren mit hoher Betriebstemperatur ausgebildet sind.

4. Vorrichtung nach einem der Ansprüche 1 bis 3, dadurch gekennzeichnet, daß die elektrischen Signale von mindestens zwei in Strömungsrichtung des Abgases am Ausgang des Katalysators (10) angeordneten Temperatursensoren (20) ausgewertet werden.

5. Vorrichtung nach einem der Ansprüche 1 bis 4, dadurch gekennzeichnet, daß mindestens ein Sensor (20) mit einer gasundurchlässigen und mindestens ein Katalysator (10) mit einer gasdurchlässigen porösen Schutzschicht abgedeckt ist.

6. Vorrichtung nach Anspruch 1, dadurch gekennzeichnet, daß der Temperatursensor aus einer mit Katalysator material beschichteten Platinschicht besteht.

## Claims

1. A device for monitoring the operability of possibly heatable catalytic converters in exhaust gas systems, preferably of internal combustion engines, which are arranged in the flowing exhaust gas, comprising carrier material provided with a catalyst-bearing ceramic coating, wherein electrical signals from temperature sensors (20) which are in thermal contact with the catalyst and which have electrical signals proportional to the temperature are evaluated by an evaluating device, characterised in that the temperature sensors (20) are applied by means of a thick-film procedure directly on to the catalytically active surface of the catalytic converter (10).

2. A device according to claim 1 characterised in that in addition to the temperature sensors (20) connecting contacts (22) which are arranged at a spacing therefrom and which are electrically connected thereto are printed on by a thick-film procedure.

3. A device according to claim 1 or claim 2 characterised in that the temperature sensors are in the form of heat tone sensors with a high operating temperature.

4. A device according to one of claims 1 to 3 characterised in that the electrical signals of at least two temperature sensors (20) arranged at the outlet of the catalytic converter (10) in the flow direction of the exhaust gas are evaluated.

5. A device according to one of claims 1 to 4 characterised in that at least one sensor (20) is covered with a gas-impermeable protective layer and at least one catalyst (10) is covered with a gas-permeable porous protective layer.

6. A device according to claim 1 characterised in that the temperature sensor comprises a platinum layer coated with catalyst material.

## Revendications

1. Dispositif pour surveiller la fiabilité fonctionnelle de catalyseurs, disposé dans le courant du gaz d'échappement, éventuellement de catalyseurs chauffés intégrés à des installations d'échappement, de préférence afférentes à des moteurs à combustion, comportant un matériau support muni d'un revêtement céramique contenant le catalyseur, tandis qu'un dispositif d'analyse analyse des signaux électriques venant des capteurs de température (20) en contact thermique avec le catalyseur, ces signaux électriques étant proportionnels à la température,
ce dispositif étant caractérisé en ce que les capteurs de température (20) sont fixés directement sur la surface catalytiquement active du catalyseur (10) au moyen de la technique appelée à "couche épaisse".

2. Dispositif selon la revendication 1, caractérisé en ce que, outre les capteurs de température (20), sont disposés à une certaine distance de ceux-ci et en liaison électrique avec eux, des contacts de connexion (22) fixés par impression selon la technique à couche épaisse.

3. Dispositif selon la revendication 1 ou 2, caractérisé en ce que les capteurs de température sont réalisés sous la forme de capteurs de la chaleur de réaction à température opérationnelle élevée.

4. Dispositif selon l'une des revendications 1 à 3, caractérisé en ce que l'analyse affecte les signaux électriques venant d'au moins deux capteurs de température (20) disposés dans la direction du courant du gaz d'échappement à la sortie du catalyseur (10).

5. Dispositif selon l'une des revendications 1 à 4, caractérisé en ce qu'au moins un capteur (20) est recouvert d'une couche imperméable au gaz et en ce qu'au moins un catalyseur (10) est recouvert d'une couche protectrice poreuse perméable au gaz.

6. Dispositif selon la revendication 1, caractérisé en ce que le capteur de température est constitué d'une couche de platine recouverte d'un matériau catalytique.
